# EUROPEAN PATENT SPECIFICATION

(11) **EP 0 735 001 B1**
(45) Date of publication and mention of the grant of the patent: **17.10.2001**
(21) Application number: 96300919.6
(22) Date of filing: 09.02.1996
(51) Int. Cl.: C01B 13/14, C01F 7/02, B22F 9/18, C22C 1/10, B22F 1/00

(54) **Ultrafine particles and production method thereof**
Ultrafeine Teilchen und Verfahren zu ihrer Herstellung
Particules ultrafins et procédé pour leur production

(30) Priority: 09.02.1995 JP 2171595
(43) Date of publication of application: 02.10.1996
(73) Proprietor: RESEARCH DEVELOPMENT CORPORATION OF JAPAN, Kawaguchi-shi, Saitama-ken 332 (JP); KABUSHIKI KAISHA TOSHIBA, Kawasaki-shi, Kanagawa-ken 210-8520 (JP)
(72) Inventor: Tanaka, Shun-Ichiro, Yokohama-shi, Kanagawa-ken (JP); Xu, Bing She, Yokohama-shi, Kanagawa-ken (JP)
(74) Representative: Brookes Batchellor

(56) References cited:
- NANOSTRUCTURED MATERIALS, vol. 6, 1995, USA, pages 727-730, XP000671923 BINGSHE XU: "phase transformation and bonding of ceramic nanoparticles in a tem" & H.E. SCHAEFER: "proceedings of the second international conference on nanostructured materials" 3 October 1994 , PERGAMON
- MATERIALS LETTERS, vol. 7, no. 12, March 1989, HOLLAND, pages 441-444, XP002030785 J. HERLEY: "ultra-fine particles of aluminium..."
- JOURNAL OF CRYSTAL GROWTH , vol. 79, 1986, HOLLAND, pages 403-409, XP002030786 KAITO: "structure and crystallization process of a thin film ..."

## Description

This invention relates to ultrafine powder comprising ultrafine particles of a metal oxide or nanoparticles of a metal which is a component of the metal oxide and a growing production method thereof, and to a growing body of metal oxide ultrafine particles and a production method thereof.

Metal particles or compound particles such as metal oxide particles, whose particles are ultrafine with a diameter of 100 nm or less, have different properties from normal particles (for example 1 *µ*m or more). This is because the number of atoms present on a particle surface increase relative to the total number of atoms of the particle, that is, the specific surface area increases, thereby effects from surface free energy can not be ignored when considering the properties of such particles.

The above-mentioned ultrafine particles are suitable for finding and evaluating new surface phenomena. In addition, the melting point and sintering temperature of ultrafine particles decrease in comparison with a bulk quantity. Therefore, these properties can be applied in various uses. Consequently, the physical properties of ultrafine particles and their use are subject to research and development.

Moreover, conventional ultrafine particles are produced by physical or chemical methods as follows: as examples of a physical production method of ultrafine particles; an evaporation method in gases whereby a metal or the like is evaporated in inert gas, then ultrafine particles are produced to be cooled and condensed by collision with the gas, a sputtering method utilizing sputter phenomenon as a vaporizing source, a metal evaporation synthesis method whereby a metal is heated in a vacuum and vaporized metal atoms are deposited together with an organic solvent on a substrate which is cooled below the freezing point of the organic solvent, and a vacuum evaporation method on a fluid oil whereby a metal is deposited on an oil.

As chemical production methods of making ultrafine particles, examples include utilizing a liquid phase; a colloid method whereby a noble metal salt is reduced in an alcohol in the presence of a high molecular surface active agent under reflux, an alkoxide method utilizing hydrolysis of a metal alkoxide, and coprecipitation methods whereby a precipitant is added to a metal salt mixture to obtain precipitated particles. As a chemical production method for producing ultrafine particles, it is also possible to use a gaseous phase; an organic metal compound pyrolisis method wherein a metal carbonyl compound is pyrolized to obtain metal ultrafine particles, a metal chloride reducing/oxidizing/nitriding method wherein a metal chloride is reduced/oxidized/nitrided in an air current of reacting gases to obtain ultrafine particles, a reduction method in hydrogen wherein an oxide or a hydrate is heated in a hydrogen current, and a solvent evaporation method wherein a metal salt solution is atomized through a nozzle to dry by hot air.

Research and development of ultrafine particles are mainly concerned with aggregates of the ultrafine particles (e.g. an ultrafine powdered body). Therefore, the properties and applications of ultrafine particles themselves as a unit substance have received less attention. This fact also results from the above-mentioned production methods of the ultrafine particles. Although many conventional production methods are suitable for producing an aggregate of the ultrafine particles, it is difficult to obtain an ultrafine particle as a unit substance.

Moreover, in conventional production methods of the ultrafine particles, in the case of a metal that is easily combined with oxygen, formation of a surface oxide can not be inhibited, and it is therefore difficult to obtain ultrafine particles of pure metal.

Therefore, to facilitate research into the physical properties and/or applications of an ultrafine particle as a unit substance, ultrafine particles that can be produced as a unit substance such as a powder of the particles, and handled and controlled in various manners as a unit substance is needed. Furthermore, a production method for making pure metal ultrafine particles is also needed.

A first object of the present invention is to provide an ultrafine powder comprising ultrafine particles that, for example, can be handled and controlled in various manners as a unit substance and a production method for making them.

A second object of the present invention is to provide an ultrafine particle growing body with a shape and property controllable by controlling the production process of the ultrafine particles.

An ultrafine powder of the present invention comprises stable ultrafine particles of a metal oxide and/or nanoparticles of a metal which is a component of the metal oxide, wherein the metal oxide ultrafine particles and/or the metal nanoparticles are disposed on an amorphous carbon film and composed of constituent atoms or molecules derived from metastable particles of the metal oxide by irradiating an electron beam in a vacuum.

A method for producing an ultrafine powder comprising ultrafine stable particles of a metal oxide and/or nanoparticles of a metal which is a component metal of the metal oxide, comprises a step of irradiating an electron beam having an intensity of more than 10¹⁹e/cm².sec in a vacuum upon metastable particles of the metal oxide, the metastable particles being disposed on an amorphous carbon film.

A growing body of ultrafine particles according to the present invention comprises ultrafine particles composed of constituent molecules derived from a metastable metal oxide particle wherein the ultrafine particles are grown in a definite crystal direction of the ultrafine particles to form the growing body.
A method for producing a growing body of ultrafine particles comprises the steps of disposing metastable metal oxide particles on an amorphous carbon film, initially irradiating an electron beam upon a portion of the amorphous carbon film surrounding the metastable metal oxide particles, irradiating an electron beam having an intensity of more than 10¹⁹e/cm².sec in a vacuum upon the metastable metal oxide particles to form stable metal oxide ultrafine particles, and irradiating continuously upon the stable metal oxide particles to form a growing body which grows in a definite crystal direction of the metal oxide ultrafine particles.
According to the present invention, ultrafine particles such as stable ultrafine particles of a metal oxide and/or nanoparticles of a metal which is a component of the metal oxide can be produced on a room temperature stage requiring no specific control by irradiating an electron beam upon said metastable metal oxide particles disposed upon amorphous carbon film in a vacuum. In addition, according to the present invention, shapes and properties of said ultrafine particles can be controlled by the irradiation intensity of the electron beam and by use of initial irradiation of the electron beam.

As the metastable metal oxide particles of the present invention, θ-Al₂O₃ particles that are a metastable phase of Al₂O₃ are cited as examples. The diameter of the particles is not especially limited, for example, a diameter of 90 to 200 nm can be used. When disposing the metastable phase of θ-Al₂O₃ particles on an amorphous carbon film, and irradiating them with an electron beam in a vacuum, ultrafine particles are produced that are smaller than the θ-Al₂O₃ particles which is the starting material. These ultrafine particles consist of particles of α-Al₂O₃ which is a stable phase of Al₂O₃, or nanoparticles of Al which is a constituent metal of Al₂O₃ together with the α-Al₂O₃ ultrafine particles. The ultrafine particles of the present invention that are obtained by irradiating the electron beam upon such metastable metal oxide particles disposed upon amorphous carbon film are the stable metal oxide ultrafine particles and/or the nanoparticles of a metal which is a component of the metal oxide.

The obtained stable metal oxide ultrafine particles can have a nearly spheric shape. However, shapes of the stable metal oxide ultrafine particles are not limited to spheric, but also rod-like and mushroom-like shapes are available by controlling irradiation conditions of the electron beam or the like. Any shape of the stable metal oxide ultrafine particles can be separated as a simple substance. A diameter of the nearly spheric stable metal oxide ultrafine particles is, for example, in the range from 20 to 50 nm, and a diameter of rod-like stable metal oxide ultrafine particles is, for example, in the range from 10 to 20 nm. On the other hand, the metal nanoparticles are pure metal particles with no surface oxide and can also be in any shape by controlling the irradiation condition of the electron beam or the like. Any shape of the metal nanoparticles can be separated as a simple substance, as well. For example, a diameter of the nearly spheric nanoparticles is in the range from 5 to 20 nm. The ultrafine powder comprising the stable metal oxide ultrafine particles and the metal nanoparticles of the present invention can be handled and controlled in various manners as a unit substance by irradiating the electron beam or the like.

In a production method of the present invention, the intensity of the electron beam to irradiate the metastable metal oxide particles is more than 1 x 10¹⁹ e/cm².sec (2A/cm²). If the intensity of the electron beam is less than 1 x 10¹⁹ e/cm².sec, the metastable metal oxide particles can not be activated so that the stable metal oxide ultrafine particles and the metal nanoparticles are produced. In other words, the electron beam having the intensity of more than 1 x 10¹⁹ e/cm².sec confers a localized heating effect and a knock-on effect of an oxygen atom to the metastable metal oxide particles. Thereby, the stable metal oxide ultrafine particles and the metal nanoparticles can be produced.

Moreover, the type and status of a product of the present invention can be adjusted by the intensity of the electron beam irradiated. That is, by irradiating the electron beam having relatively weak intensity of more than 1 x 10¹⁹ e/cm².sec, specifically 1 x 10¹⁹ to 1 x 10²⁰ e/cm².sec for example, almost only stable metal oxide ultrafine particles are produced. On this occasion, the metastable metal oxide particles are gradually transformed into small stable metal oxide ultrafine particles on a surface of the metastable metal oxide particles.

On the other hand, by irradiating the electron beam having relatively strong intensity of more than 1 x 10¹⁹ e/cm².sec, specifically 3 x 10²⁰ e/cm².sec to the metastable metal oxide particles, the metal nanoparticles are produced together with the stable metal oxide ultrafine particles. On this occasion, the metastable metal oxide particles are transformed into the stable metal oxide particles (which does not always occur), then small amorphous oxide particles and the metal nanoparticles are produced. Thereafter, the amorphous oxide particles become the stable metal oxide ultrafine particles. In addition, by further controlling the intensity of the electron beam, shapes of the ultrafine particles can be controlled. This will be described later.

In the production method of the present invention, the electron beam is irradiated upon the metastable metal oxide particles disposed on an amorphous carbon film in a vacuum. In particular, a vacuum of 10⁻⁵ Pa or less is preferable. If the vacuum of the electron beam irradiated exceeds 10⁻⁵ Pa, remaining gases, especially oxygen atoms may cover the metal ultrafine particles with an oxide layer, and other compounds may be produced. On the other hand, unless the metastable metal oxide particles are disposed on the amorphous carbon film, the production rate of the ultrafine particles decreases and production in a room temperature stage is difficult.

The above-mentioned transformation, for example, from the metastable phase of θ-Al₂O₃ to the stable phase of α- Al₂O₃ is a phenomenon which occurs, only at a high temperature of about 1400K under normal conditions. However, according to the present invention, by irradiating an electron beam of more than 1 x 10¹⁹ e/cm².sec in a vacuum, the α-Al₂O₃ ultrafine particles are produced from the θ-Al₂O₃ particles (from θ to α transformation). Moreover, Al nanoparticles can be produced from the θ-Al₂O₃ particles on a room temperature stage. In general, irradiating the electron beam under controlled heating conditions is difficult. Therefore, it is significant that the θ-Al₂O₃ ultrafine particles and the Al ultrafine particles can be produced by irradiating the electron beam in a room temperature stage.

According to the present invention, when irradiating the electron beam upon the metastable metal oxide particles mentioned above, the shapes and production statuses of the obtained stable metal oxide ultrafine particles can be controlled by regulating irradiation intensity of the electron beam, and by initially irradiating the electron beam around the metastable metal oxide particles disposed on the amorphous carbon film.

For example, when the irradiation intensity of the electron beam is more than 3 x 10²⁰ e/.cm².sec (50A/cm²), rod-like and mushroom-like ultrafine particles can be produced in addition to spheric ultrafine particles. These heteromorphic ultrafine particles are extremely difficult to produce in a normal production method.

Moreover, by initially irradiating the electron beam around the metastable metal oxide particles of the amorphous carbon film disposed on the metastable metal oxide particles, the stable metal oxide ultrafine particles produced can be grown along with the initially irradiated portions of said amorphous carbon film so that a crystal direction of the stable metal oxide ultrafine particles is definite. According to the present invention, the growing body of ultrafine particles has a uniform crystal direction of stable metal oxide ultrafine particles obtained from such method, and can be grown in various shapes depending upon forms of the preliminary irradiated portions of the electron beam

When producing the growing body of ultrafine particles of the present invention, the preliminary, i.e. initial irradiation intensity is preferably from 1 x 10¹⁹ to 3 x 10²⁰ e/cm².sec (2 to 50 A/cm²). If the preliminary irradiation intensity of the electron beam is less than 1 x 10¹⁹ e/cm².sec, amorphous ultrafine particles are mainly produced. On the other hand, if the preliminary irradiation intensity exceeds 3 x 10²⁰ e/cm².sec, the crystal may be grown randomly.

In order that the invention may be illustrated, more easily appreciated and readily carried into effect by those skilled in this art, embodiments of the invention will now be described by way of non-limiting example only with reference to the accompany drawings and wherein:
Fig. 1A is a schematic diagram illustrating a phase transformation of ultrafine particles after irradiating an electron beam for 50 seconds according to the embodiment 1;
Fig. 1B is a schematic diagram illustrating a phase transformation of the ultrafine particles after elapsed time according to the embodiment 1;
Fig. 2 is a schematic diagram illustrating ultrafine particles formed according to another embodiment of the present invention; and
Fig. 3 is a schematic diagram illustrating ultrafine particle growing body formed according to yet another embodiment of the present invention.

Embodiments of the present invention will be described with reference to these drawings.

### Embodiment 1

First, spherical θ-Al₂O₃ particles (purity 99.8%) with a diameter of 90 to 110 nm were prepared as metastable metal oxide particles. The particles were dispersed in alcohol, applied to a carbon support film and dried.

Secondly, the carbon support film-disposed spherical Θ-Al₂O₃ particles were arranged on a room temperature stage which was disposed in a vacuum room of 200kV TEM (JEOL, JEM-2010). Thirdly, the vacuum room was evacuated to 1 x 10⁻⁵ Pa. Fourthly, an electron beam having an intensity of 3.0 x 10¹⁹ e/cm².sec (6 A/cm²) was irradiated with an irradiation diameter of 250 nm upon the θ-Al₂O₃ particles having a diameter of about 100 nm disposed on the carbon support film.

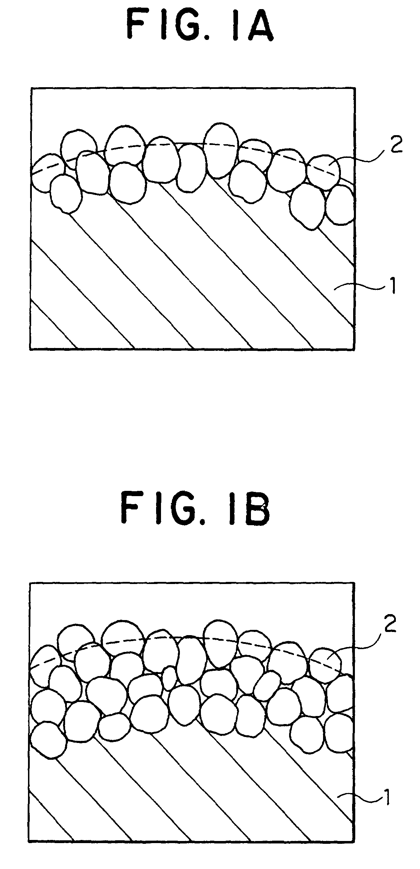

While irradiating the electron beam, a phase transformation of the θ-Al₂O₃ particles was observed in-situ. With reference to schematic diagrams of Fig. 1, the observed result will be described. After 50 seconds irradiation of the electron beam, a gradual transformation from the θ-Al₂O₃ particle 1 to α-Al₂O₃ was observed on a surface of the θ-Al₂O₃ particle, as shown in Fig. 1A. The α-Al₂O₃ ultrafine particles 2 were about 15 nm in a diameter. After the elapsed time of the irradiation, the transformation from the θ-Al₂O₃ to the α-Al₂O₃ proceeded to an inner portion of the θ-Al₂O₃, as shown in Fig. 1B. After 200 seconds irradiation of the electron beam, the transformation to α-Al₂O₃ ultrafine particles 2 having a diameter of about 15 nm was completed. Almost all ultrafine particles obtained were the α-Al₂O₃ ultrafine particles.

Thus, the α-Al₂O₃ ultrafine particles were obtained by the phase transformation from the Θ-Al₂O₃ to the α-Al₂O₃ accompanying the electron beam irradiation upon the metastable θ-Al₂O₃. This phase transformation is apparently based on both a localized heating effect and an oxygen atom displacement effect by the electron which was irradiated.

### Embodiment 2

Similarly to embodiment 1, a carbon support film, on which spherical θ-Al₂O₃ particles having a diameter of 90 nm were disposed, was provided on a room temperature stage in a vacuum room of 200 kV TEM apparatus. The vacuum room was evacuated to 1 x 10⁻⁵ Pa. Then, an electron beam having an intensity of 1.3 x 10²⁰ e/cm².sec (20A/cm²) was irradiated with an irradiation diameter of 250 nm upon the θ-Al₂O₃ particles on the carbon support film.

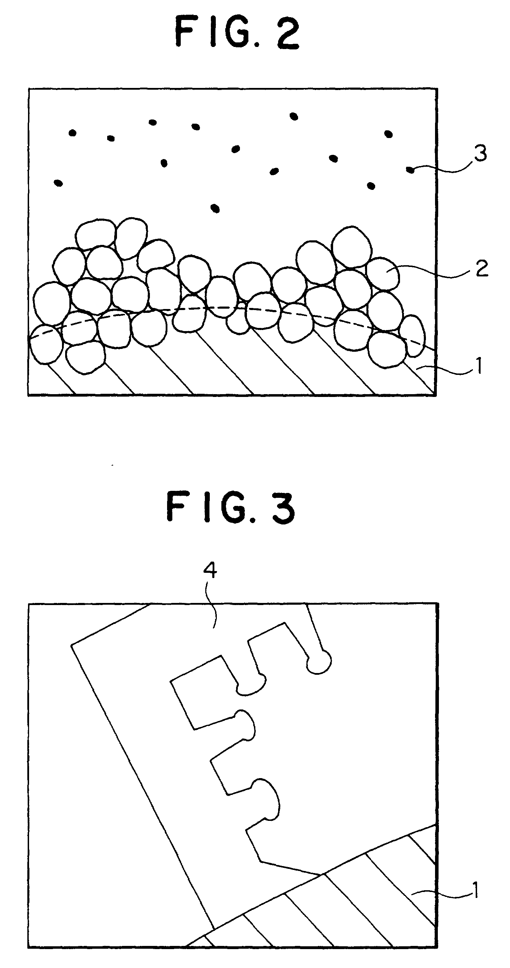

While irradiating the electron beam, a phase transformation of the θ-Al₂O₃ particles was observed in-situ. With reference to the schematic diagram of Fig. 2, the observed result will be described. After 50 seconds irradiation of the electron beam, a phase transformation from the θ-Al₂O₃ to α-Al₂O₃ was observed. After the elapsed time of the irradiation, formation of amorphous Al₂O₃ particles having a small diameter was observed. In addition, Al nanoparticles having a diameter of 5 to 10 nm were observed around the small amorphous particles of Al₂O₃. Moreover, by continuing the irradiation of the electron beam, α-Al₂O₃ ultrafine particles 2 having a diameter of 15 to 50 nm were formed from the small amorphous Al₂O₃ particles, as shown in Fig. 2. Around the α-Al₂O₃ ultrafine particles 2 having a diameter of 15 to 50 nm, Al nanoparticles 3 having a diameter of 5 to 10 nm were formed. These α-Al₂O₃ ultrafine particles 2 and the Al nanoparticles 3 were completed after 200 seconds irradiation of the electron beam.

Thus, the α-Al₂O₃ ultrafine particles and the Al nanoparticles were obtained by irradiation of the electron beam upon the metastable θ-Al₂O₃ particles. Formation of these α-Al₂O₃ ultrafine particles and Al nanoparticles is apparently based on both a localized heating effect and an oxygen atom displacement (knock-on) effect by the electron which was irradiated, in simirar fashion to embodiment 1.

### Embodiment 3

Similarly to embodiment 1, a carbon support film on which spherical θ-Al₂O₃ particles having a diameter of 110 nm are disposed, was provided on a room temperature stage in a vacuum room of 200 kV TEM apparatus. The vacuum room was evacuated to 1 x 10⁻⁵ Pa. Then, an electron beam having an intensity of 10²⁰ e/cm².sec (50A/cm²) was irradiated with an irradiation diameter of 250 nm upon θ-Al₂O₃ particles on the carbon support film.

While irradiating the electron beam mentioned above, a phase transformation of the θ-Al₂O₃ particles was observed in-situ. The observed result will be described. After 50 seconds irradiation of the electron beam, formation of amorphous Al₂O₃ particles having a diameter of 20 nm was observed. Around the amorphous Al₂O₃ particles, it was confirmed that Al nanoparticles having a diameter of about 5 nm were formed directly from the θ-Al₂O₃. Moreover, by continuing the irradiation of the electron beam, α-Al₂O₃ ultrafine particles having a diameter of 10 nm were produced from the small amorphous Al₂O₃ particles. Around the α-Al₂O₃ ultrafine particles having a diameter of 10 nm, rod-like α-Al₂O₃ ultrafine particles were formed together with the Al nanoparticles having a diameter of 5 nm. Shapes of rod-like α-Al₂O₃ ultrafine particles were diverse. Mushroom-like α-Al₂O₃ ultrafine particles also coexisted.

Thus, the spherical and the rod-like α-Al₂O₃ ultrafine particles and the Al nanoparticles were obtained by irradiation of the electron beam upon the metastable Θ-Al₂O₃. Formation of these α-Al₂O₃ ultrafine particles and Al ultrafine particles is apparently based on both a localized heating effect and an oxygen atom displacement (knock-on) effect by the electron which was irradiated, similarly to embodiment 1.

### Embodiment 4

Similarly to embodiment 1, a carbon support film on which spherical θ-Al₂O₃ particles having a diameter of 100 nm were disposed, was provided on a room temperature stage in a vacuum room of 200 kV TEM apparatus. The vacuum room was evacuated to 1 x 10⁻⁵ Pa, an electron beam was initially irradiated upon the carbon support film surrounding the Θ-Al₂O₃ particles. The diameter of the electron beam used for the initial irradiation was 250 nm, and the intensity of the electron beam was 1 x 10¹⁹ e/cm².sec. Configuration of the initial irradiation was L-shaped with the same width as the irradiation diameter.

Next, an electron beam having an intensity of 1 x 10¹⁹ e/cm².sec (2A/cm²) and an irradiation diameter of 250 nm were irradiated for 400 seconds upon the θ-Al₂O₃ particles having a diameter of 100 nm and initially irradiated. After the elapsed time of the irradiation, α-Al₂O₃ particles were grown along with initially irradiated portions so that a crystal direction of the α-Al₂O₃ particles was definite. After the elapsed time of the irradiation, it was confirmed that a single crystal of α-Al₂O₃ growing ultrafine particle 4 was formed along the initially irradiated portions of the electron beam, as shown in Fig. 3.

Thus, the α-Al₂O₃ ultrafine particle growing body wherein the α-Al₂O₃ ultrafine particles were grown in a definite crystal direction was obtained by preliminary irradiation of the electron beam upon the carbon support film and by irradiation of the electron beam upon the metastable θ-Al₂O₃ particles. Formation of the α-Al₂O₃ ultrafine particle bonding body(growing body) is apparently based on an orientation base forming effect by the preliminary irradiation of the electron beam, and on a localized heating effect, and an oxygen atom displacement (knock-on) effect by the electron irradiated upon the θ-Al₂O₃ particles.

In the above-mentioned embodiments, examples of the present invention applied to formation of stable α-Al₂O₃ ultrafine particles and Al nanoparticles from the metastable phase Θ-Al₂O₃ particles are described. However, the present invention is not limited thereto. For example, using anatage type TiO₂ (high temperature phase of TiO₂) or similar metal oxide as the metastable metal oxide particles, ultrafine particles of rutile type Tio₂ (which is a stable phase of the low temperature phase TiO₂) and Ti nanoparticles can be produced as well.

As described above, according to the production method of the ultrafine particles of the present invention, ultrafine particles that can be handled and controlled in various manners as a unit substance under moderate conditions such as on a room temperature stage can be obtained. Such ultrafine particles of the present invention can contribute significantly to, for example, further research into the physical properties and industrial applications of ultrafine particle as a unit substance.

Moreover, according to the production method for the ultrafine particle growing body of the present invention, a production process for making the ultrafine particles is controllable. Thereby, an ultrafine particle growing body whose shape and properties are controllable can be obtained. Such ultrafine particle growing body of the present invention can also contribute significantly to research and development concerning various industrial applications of ultrafine particles.

## Claims

1. An ultrafine powder comprising stable ultrafine particles of a metal oxide and/or nanoparticles of a metal which is a component of the metal oxide,
wherein the ultrafine particles and/or the nanoparticles are disposed on an amorphous carbon film and composed of constituent atoms or molecules derived from a metastable metal oxide particle with electron beam irradiation in a vacuum.

2. Powder as claimed in claim 1, wherein the ultrafine particles and/or the nanoparticles have a shape from one or more of the following shapes: sphere, a rod and a mushroom shape.

3. Powder as claimed in claim 1 or 2, wherein the metastable particles are θ-Al₂O₃ particles, the stable ultrafine particles are α-Al₂O₃ ultrafine particles, and the metal nanoparticles are Al nanoparticles.

4. A method for producing an ultrafine powder comprising ultrafine stable particles of a metal oxide and/or nanoparticles of a metal which is a component metal of the metal oxide, comprising the steps of:
disposing a metastable particle of the metal oxide on an amorphous carbon film, and
irradiating an electron beam having an intensity of more than 10¹⁹e/cm².sec in a vacuum of 10⁻⁵ Pa or less upon the metastable particle of the metal oxide.

5. A method as claimed in claim 4, wherein the diameter of the metastable particles is in the range of 90 to 200 nm, the diameter of the ultrafine stable particles of the metal oxide is in the range of 10 to 50 nm, and the diameter of the metal nanoparticles is in the range of 5 to 20 nm.

6. A method as claimed in claim 4 or 5, wherein the metastable particles are θ-Al₂O₃ particles, the stable ultrafine particles are α-Al₂O₃ ultrafine particles, and the metal nanoparticles are Al nanoparticles.

7. A growing body of ultrafine particles of a stable metal oxide,
wherein the ultrafine particles are composed of constituent molecules derived from a metastable metal oxide particle with electron beam irradiation in a vacuum and grown in a definite crystal direction of the ultrafine particles.

8. The growing body as claimed in claim 7, wherein the ultrafine particles are α-Al₂O₃ ultrafine particles.

9. A method for producing a growing body of ultrafine particles comprising the steps of:
disposing a metastable metal oxide particle on an amorphous carbon film,
initially irradiating an electron beam having an intensity of more than 10¹⁹e/cm².sec upon a portion of the amorphous carbon film surrounding the metastable metal oxide particle,
irradiating an electron beam having an intensity of more than 10¹⁹e/cm².sec in a vacuum upon the metastable metal oxide particle to form stable metal oxide ultrafine particles, and
irradiating continuously upon the stable metal oxide particles to form a growing body which grows in a definite crystal direction of the metal oxide ultrafine particles.

10. A method as claimed in claim 9, wherein the metastable particles are θ-Al₂O₃ particles, and the stable ultrafine particles are α-Al₂O₃ ultrafine particles.

## Patentansprüche

1. Ein ultrafeines Pulver, das stabile ultrafeine Metalloxidteilchen und/oder Nanoteilchen eines Metalls enthält, das eine Komponente des Metalloxids ist,
wobei die ultrafeinen Teilchen und/oder die Nanoteilchen auf einem amorphen Kohlenstoff-Film aufgebracht und aus elementaren Atomen oder Molekülen zusammengesetzt sind, die durch Bestrahlung mit einem Elektronenstrahl unter Vakuum aus metastabilen Metalloxidteilchen abgeleitet sind.

2. Pulver nach Anspruch 1, wobei die ultrafeinen Teilchen und/oder die Nanoteilchen eine Form einer oder mehrerer der folgenden Formen aufweisen: Kugelform, Stabform und Pilzform.

3. Pulver nach Anspruch 1 oder 2, wobei die metastabilen Teilchen θ-Al₂O₃-Teilchen, die stabilen ultrafeinen Teilchen ultrafeine α-Al₂O₃-Teilchen und die metallenen Nanoteilchen Al-Nanoteilchen sind.

4. Ein Verfahren zur Herstellung eines ultrafeinen Pulvers, das ultrafeine stabile Metalloxidteilchen und/oder Nanoteilchen eines Metalls, das eine Metallkomponente des Metalloxids ist, enthält, wobei das Verfahren die folgenden Verfahrensschritte umfaßt:
Aufbringen eines metastabilen Metalloxidteilchens auf einem amorphen Kohlenstoff-Film und
Bestrahlung des metastabilen Metalloxidteilchens mit einem Elektronenstrahl einer Intensität von mehr als 10¹⁹ e/cm²s unter einem Vakuum von 10⁻⁵ Pa oder weniger.

5. Ein Verfahren nach Anspruch 4, wobei der Durchmesser der metastabilen Teilchen in einem Bereich von 90 bis 200 nm, der Durchmesser der ultrafeinen stabilen Metalloxidteilchen in einem Bereich von 10 bis 50 nm und der Durchmesser der metallenen Nanoteilchen in einem Bereich von 5 bis 20 nm liegt.

6. Ein Verfahren nach Anspruch 4 oder 5, wobei die metastabilen Teilchen θ-Al₂O₃-Teilchen, die stabilen ultrafeinen Teilchen ultrafeine α-Al₂O₃-Teilchen und die metallenen Nanoteilchen Al-Nanoteilchen sind.

7. Ein Zuchtkörper aus ultrafeinen Teilchen eines stabilen Metalloxids, wobei die ultrafeinen Teilchen aus elementaren Molekülen zusammengesetzt sind, die aus einem mit einem Elektronenstrahl unter Vakuum bestrahlten metastabilen Metalloxidteilchen erhalten und in eine bestimmte Kristallrichtung der ultrafeinen Teilchen gezüchtet sind.

8. Ein Zuchtkörper nach Anspruch 7, wobei die ultrafeinen Teilchen ultrafeine α-Al₂O₃-Teilchen sind.

9. Ein Verfahren zur Herstellung eines Zuchtkörpers aus ultrafeinen Teilchen, das die folgenden Verfahrensschritte umfaßt:
Aufbringen eines metastabilen Metalloxidteilchens auf einem amorphen Kohlenstoff-Film,
anfängliche Bestrahlung eines Teils des amorphen Kohlenstoff-Films, der das metastabile Metalloxidteilchen umgibt, mit einem Elektronenstrahl einer Intensität von mehr als 10¹⁹ e/cm²s,
Bestrahlung des metastabilen Metalloxidteilchens mit einem Elektronenstrahl einer Intensität von mehr als 10¹⁹ e/cm²s unter Vakuum, um stabile ultrafeine Metalloxidteilchen zu bilden und
kontinuierliche Bestrahlung der stabilen Metalloxidteilchen, um einen Zuchtkörper zu bilden, der in eine bestimmte Kristallrichtung der ultrafeinen Metalloxidteilchen wächst.

10. Ein Verfahren nach Anspruch 9, wobei die metastabilen Teilchen θ-Al₂O₃-Teilchen und die stabilen ultrafeinen Teilchen ultrafeine α-Al₂O₃-Teilchen sind.

## Revendications

1. Poudre ultrafine comprenant des particules ultrafines stables d'un oxyde de métal et/ou des nanoparticules d'un métal qui est un composant de l'oxyde de métal,
dans laquelle les particules ultrafines et/ou les nanoparticules sont disposées sur une pellicule de carbone amorphe et sont composées d'atomes ou de molécules constituants dérivés d'une paeticule d'oxyde de métal métastable, une irradiation de faisceau d'électrons se produisant dans un vide.

2. Poudre selon la revendication 1, dans laquelle les particules ultrafines et/ou les nanoparticules présentent une forme composée d'une ou plusieurs des formes suivantes : forme sphérique, de tige et de champignon.

3. Poudre selon la revendication 1 ou la revendication 2, dans laquelle les particules métastables sont des particules de θ-Al₂O₃, les particule ultrafines stables sont des particules ultrafines de α-Al₂O₃ et les nanoparticules de métal sont des nanoparticules de Al.

4. Procédé destiné à fabriquer une poudre ultrafine comprenant des particules ultrafines stables d'un oxyde de métal et/ou des nanoparticules d'un métal qui est un composant de l'oxyde de métal, comprenant les étapes consistant à :
disposer une particule métastable de l'oxyde de métal sur une pellicule de carbone amorphe, et
irradier un faisceau d'électrons présentant une intensité supérieure à 10¹⁹ e/cm².sec dans un vide de 10⁻⁵ Pa ou moins, sur la particule métastable de l'oxyde de métal.

5. Procédé selon la revendication 4, dans lequel le diamètre des particules métastables se trouve dans la plage allant de 90 à 200 nm, le diamètre des particules ultrafines stables de l'oxyde de métal se trouve dans la plage allant de 10 à 50 nm, et le diamètre des nanoparticules de métal se trouve dans la plage allant de 5 à 20 nm.

6. Procédé selon la revendication 4 ou la revendication 5, dans lequel les particules métastables sont des particules de θ-Al₂O₃, les particules ultrafines stables sont des particules ultrafines de α-Al₂O₃, et les nanoparticules de métal sont des nanoparticules de Al.

7. Corps croissant de particules ultrafines d'un oxyde de métal stable,
dans lequel les particules ultrafines se composent de molécules constituantes dérivées d'une particule métastable d'oxyde de métal, une irradiation de faisceau d'électrons se produisant dans un vide, et que l'on fait croître dans une direction de cristal des particules ultrafines déterminée.

8. Corps croissant selon la revendication 7, dans lequel les particules ultrafines sont des particules ultrafines de α-Al₂O₃.

9. Procédé destiné à fabriquer un corps croissant de particules ultrafines comprenant les étapes consistant à :
disposer une particule métastable d'oxyde de métal sur une pellicule de carbone amorphe,
irradier tout d'abord un faisceau d'électrons présentant une intensité supérieure à 10¹⁹ e/cm2.sec sur une partie de la pellicule de carbone amorphe entourant la particule d'oxyde de métal métastable,
irradier un faisceau d'électrons présentant une intensité supérieure à 10¹⁹ e/cm2.sec dans un vide sur la particule d'oxyde de métal métastable afin de former des particules ultrafines d'oxyde de métal métastables, et
procéder à une irradiation en continu sur les particules d'oxyde de métal stables afin de former un corps croissant qui croît dans une direction de cristal déterminée des particules ultrafines d'oxyde de métal.

10. Procédé selon la revendication 9, dans lequel le particules métastables sont des particules de θ-Al₂O₃ et les particules ultrafines stables sont des particules ultrafines de α-Al₂O₃.
